# EUROPEAN PATENT SPECIFICATION

(11) **EP 0 910 947 B1**
(45) Date of publication and mention of the grant of the patent: **19.03.2003**
(21) Application number: 98110445.8
(22) Date of filing: 08.06.1998
(51) Int. Cl.: A01M 23/20

(54) **Perfected ecological cage-trap**
Verbesserte ökologische Käfigfalle
Cage-piège écologique perfectionnée

(30) Priority: 09.06.1997 ES 9701605 U
(43) Date of publication of application: 28.04.1999
(73) Proprietor: Herrera Ballester, Manuela, Torralba del Pinar, Castellon (ES); Navarro Calpe, Maria José, Torralba del Pinar, Castellon (ES)
(72) Inventor: Herrera Ballester, Manuela, Torralba del Pinar, Castellon (ES)

(56) References cited:
- DE-C- 593 752
- FR-A- 2 586 900
- FR-A- 2 614 506
- US-A- 4 899 484
- PATENT ABSTRACTS OF JAPAN vol. 1998, no. 13, 30 November 1998 (1998-11-30) & JP 10 215752 A (SAWANO TOSHIAKI), 18 August 1998 (1998-08-18)
- PATENT ABSTRACTS OF JAPAN vol. 1996, no. 07, 31 July 1996 (1996-07-31) & JP 08 056549 A (SHIGEMI TOYOKI), 5 March 1996 (1996-03-05)

## Description

The aim of this invention is to provide a "PERFECTED ECOLOGICAL CAGE-TRAP", of the type used in nature parks and private game preserves, for catching medium or small sized animals.

At present there are several reasons for wanting to catch wild animals.

One of these is to control and reduce excessive numbers of a particular species when that species is threatening to harm the survival of other animal species or to damage the the natural habitat.

Another reason is when there is a outbreak of a contagious disease among members of a species. The aim of capture in this case is to erradicate the disease by separating and treating the affected members of that species.

There are various procedures for catching animals. One procedure is the traditional snare. This is a trap that uses a bait placed on a lever or board. When the animal steps onto the board the two jaws of the trap are triggered and snap shut so imprisoning the prey.

That means of capture can prove very painful for the animals caught as the snare normally closes on their extremities causing deep wounds or even death.

Other procedures are generally based on cages where the animal is tricked into entering by the bait inside.The drawback with this type of cage is that the animal often senses that it is a trap and refuses to enter. The automatic closing mechanism on this type of cage also presents an economic drawback as it increases the cost of the cage.

Cage-traps are known from documents such as US-A- 4 899 484 and FR-A-2 614 506, the former disclosing the features of the preamble of claim 1.

In response to the difficulties presented in catching animals, a new PERFECTED ECOLOGICAL CAGE-TRAP has been developed which solves all the problems associated with capture devices.

Basically, the PERFECTED ECOLOGICAL CAGE-TRAP is a parallelepiped structure on a suitably extended rectangular base, open at the two smaller sides, where there are two doors with a perpendicular retention lug on one of their edges.

These doors have runners on both sides so as to move vertically in the same way as a guillotine.

Inside the cage, in the middle, there is a bar placed perpendicular to the longer side of the base on which a platform balances.

That bar has an "L" shaped lug which serves as a stop on the vertical part of a second "T" shaped bar, which is the intermediate element between the doors and the platform.

This "T" shaped bar perpendicularly branches out in the upper part of the cage till reaching the two sides. The ends are "L" shaped and provide support for the lugs of both side doors.

In the capture position, the perpendicular lugs of the doors rest on the "L" shaped lugs of the connecting bar so preventing the doors from closing by gravity. Likewise, the lower end of the intermediate bar between the doors and the platform is subject to the pressure exerted from the "L" shaped lug of the bar positioned under the platform, which prevents it moving upwards and so freeing the door stops which would lead to the doors coming down due to gravity.

Attached to the netted parallelepiped structure is another structure of similar dimensions with similar guillotine doors. The bait to attract the animal is placed in this structure.

The prey, in its attempt to get to the bait in the adjacent cage, goes into the cage, puts pressure on the balancing platform and makes it wobble. That frees the two latches which then cause the doors to come down. When the animal realises that the doors are closing it runs towards them to try to escape, but the distance is such that it is impossible to get there before the doors have fully shut.

Freeing the animal is a manual procedure. The doors of the cage have to be slid up through the runners.

It should be mentioned that the netting is of a material that is not harmful to the animal caught inside. Being caught the animal will launch itself repeatedly at the netting.

The system of closing for catching the prey is a simple and direct one so the cost of the cage does not become excessively expensive.

The entries and exits are completely free so the animal feels no fear or apprehension about going in.

Finally this animal cage-trap complies fully with all regulations and legislation on the treatment of animals, as it neither injures nor harms them.

### DESCRIPTION OF THE DRAWINGS

To illustrate what we have described there is a page of drawings attached. These show, in a simplified and schematic way, only one model of usage. It does not represent the limits of all the possible practices of the invention.

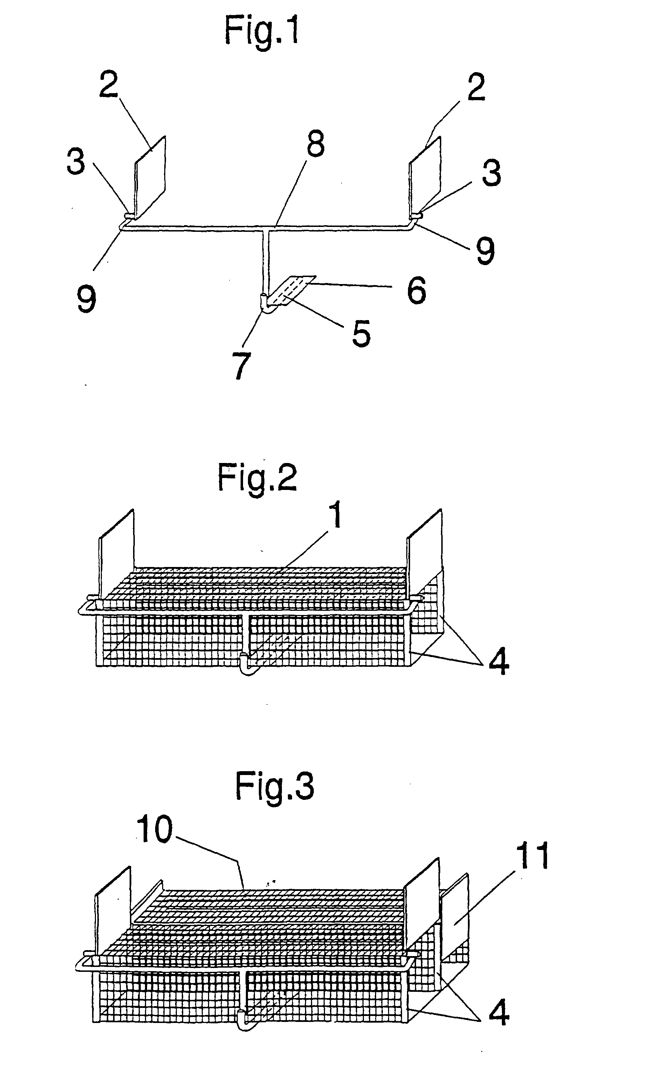

Figure 1 shows the balancing closure system of the new animal cage-trap.
Figure 2 shows the closing system from the perspective of the cage where the prey will be caught.
Figure 3 shows an overall view of the complete cage and clearly shows the adjacent cage where the bait goes.

### DESCRIPTION OF ONE PRACTICAL USAGE

The new "PERFECTED ECOLOGICAL CAGE-TRAP" is a parallelepiped structure on a suitably extended rectangular base (1), open at the two smaller sides, where there are two doors (2) with a perpendicular retention lug on one of their edges (3).

These doors (2) have runners (4) on both sides so as to move vertically in the same way as a guillotine.

Inside the cage, in the middle, there is a bar (5) placed perpendicular to the longer side of the base on which a platform balances(6).

That bar (5) has an "L" shaped lug (7) which serves as a stop on the vertical part of a second "T" shaped bar (8), the connection between the doors (2) and the platform (6), which perpendicularly branches out in the upper part of the cage till it reaches the two sides. The ends (9) are "L" shaped and hold both the side door (2) lugs (3).

In the capture position, the perpendicular lugs (3) of the doors (2) rest on the "L" shaped lugs (9) of the connecting bar (8) so preventing the doors from closing from gravity. Likewise, the lower end of the connecting bar (8) between the doors (2) and the platform (6) is subject to the pressure exerted from the "L" shaped lug (7) so preventing it from moving upwards and freeing the perpendicular lugs (3) of the doors (2), which leads to the doors coming down.

Attached to the parallelepiped structure (1) is another structure (10) of similar dimensions, where the bait is placed, and which has two guillotine-type side doors (11).

The trap has normal netting so that the bait can be clearly seen. The bait and the prey can see each other but they cannot touch. When the prey, attracted by the bait in cage (10), adjacent to the trap, goes into the cage (1), the balancing platform moves and frees the vertical branch of the "T" shaped bar (8), where all the pressure to hold the doors (2) up was being exerted. These now fall like guillotines and the animal is caught inside.

It should be stressed that thedetails of the idea described may be slightly altered, but the fundamental principles of the idea will remain the same. Those principles are essentially those mentioned in the description of the invention.

Current law on patents regards changes of shape, size, proportion and material of an already patented object to be unpatentable. The criteria of the legislator in this sense is to patent the idea that may give rise to a practical and industrial reality so that no-one may take advantage by making slight changes and presenting it as their own.

Having established and accepted that concept there now follows a list summarizing the novelties claimed.

## Claims

1. - PERFECTED ECOLOGICAL CAGE-TRAP, of the type used in nature parks and private game preserves consisting of a parallelepiped structure on a suitably extended rectangular base (1), open at the two smaller sides, where there are two doors (2) moving vertically on side runners (4) in the same way as a guillotine, **characterised in that** the doors each have a perpendicular retention lug (3) on one of their edges whilst inside the cage, there is a bar (5) placed perpendicular to the longer side of the base (1) on which a platform balances (6), that bar (5) having an "L"-shaped lug (7) which serves as a stop on the vertical part of a second "T"-shaped bar (8), which forms a connection between the doors (2) and the platform (6), which "T"-shaped bar (8) perpendicularly branches out in the upper part of the cage till it reaches the two sides the ends (9) of the "T"-shaped bar (8) being, "L"-shaped and holding both the side door (2) perpendicular lugs (3).

2. - PERFECTED ECOLOGICAL CAGE-TRAP, in accordance with the previous claim, with the special feature that, in the capture position, the perpendicular lugs (3) of the doors (2) rest on the "L" shaped ends (9) of the connecting bar (8) so preventing the doors from closing from gravity, whilst the lower end of the connecting bar (8) between the doors (2) and the platform (6) is held by the pressure of the "L" shaped lug (7) so preventing it from moving upwards and freeing the perpendicular lugs (3) of the doors (2), which leads to the doors coming down.

3. PERFECTED ECOLOGICAL CAGE-TRAP, in accordance with the previous claims, having the special feature that when the animal, attracted by the bait in adjacent cage (10), goes into the cage (1), the balancing platform (6) moves and frees the vertical branch of the "T" shaped bar (8), which, in turn, frees the perpendicular lugs (3) due to the movement of the bar ends (8), the place where all the pressure to hold the doors (2) up was being exerted. These now fall like guillotines and the animal is caught inside.

## Patentansprüche

1. Die PERFEKTIONIERTE ÖKOLOGISCHE KÄFIG-FALLE, ähnlich der Art, wie sie zum Fangen von Tieren in Naturschutzparks und in privaten Jagdgründen benutzt werden, besteht aus einer Parallelepiped-Konstruktion mit - den Umständen entsprechenden längerer oder kürzerer - rechteckiger Grundfläche (1). An den beiden Schmalseiten ist sie geöffnet und mit jeweils einer Tür versehen (2). Diese beiden Türen verfügen an den Außenseiten über rechtwinklige Ansätze [Henkel] zur Befestigung (3). Diese führen eine durch seitliche Schienen (4) gewährleistete Auf/Abwärtsbewegung durch, ähnlich einer Guillotine. Im mittleren Raum, im Innern des Käfigs, befindet sich eine Stange (5), rechtwinklig zur Längsrichtung der Grundfläche (1), auf der sich eine kippbare Plattform befindet. An einem Ende der Stange ist ein L-förmiger Ansatz angebracht, der als Stopper in vertikaler Richtung zu einer zweiten, T-förmigen Stange (8) wirkt. Sie verbindet die Türen (2) und die Plattform (6), und gabelt sich im oberen Teil des Käfigs rechtwinklig zu den Seitenteilen hin. An den Enden (9) der T-förmigen Stange (6) befinden sich L-förmige Endstücke, die die rechtwinkligen Ansätze (3) der beiden Türen (2) in ihrer Position festhalten.

2. Die PERFEKTIONIERTE ÖKOLOGISCHE KÄFIG-FALLE, wie im 1. Abschnitt des Patentanspruches beschrieben, charakterisiert sich wie folgt weiter: Wenn die Falle in der 'Fang' Position steht, befinden sich die rechtwinkligen Ansätze (3) der beiden Türen (2) in den L-förmgen Endstücken (9) der Verbindungsstange (8) und verhindern somit, daß diese sich von selbst, Schwerkraft bedingt schließen, während das untere Ende der Verbindungsstange (8) zwischen den Türen (2) und der Plattform (6) durch den L-förmigen Ansatz (7) gedrückt wird und so verhindert, daß er sich nach oben bewegen kann und die rechtwinkligen Ansätze (3) der beiden Türen (2) lösen kann und diese sich schließen.

3. Die PERFEKTIONIERTE ÖKOLOGISCHE KÄFIG-FALLE, wie im 1. und 2. Abschnitt des Patentanspruches beschrieben, charakterisiert sich wie folgt weiter: In dem Augenblick, in dem das Tier den Käfig (1) betritt, angelockt durch einen Köder in einem daneben liegenden Käfig (10), übt es Druck auf die kippbare Plattform(6) aus, sie bewegt sich und löst den Längsbalken der T-förmigen Verbindung (8). Dieser wiederum, im Innerm des Käfigs, löst die rechtwinkligen Ansätze (3) durch in-Bewegung-setzen der beiden Enden des Verbindungsstabes (8), an denen der gesamte Druck zum Hochhalten der Türen ausgeübt worden war, und läßt jetzt, guillotineartig, die Türen (2) hinunterschnellen und schließt so das Tier im Käfiginnerern ein.

## Revendications

1. CAGE - PIÈGE ÉCOLOGIQUE PERFECTIONNÉ du genre utilisé pour capturer les animaux dans les parcs naturels et les réserves de chasse privées, conçu à partir d'une structure parallélépipédique, avec une base rectangulaire légèrement élargie (1), ouverte sur les petits côtés, sur lesquels deux portes (2) ont été posées, les caractéristiques essentielles de ces portes (2) sont d'être dotées sur leurs côtés extérieurs d'un appendice de fixation perpendiculaire (3) elles ont un mouvement vertical type guillotine, grâce à des guides latéraux (4), tandis que dans la zone centrale de la cage il y a une baguette (5) perpendiculaire sur le longs côtés de la base, sur cette baguette est posée une plate-forme basculante (6), à l'extrémité de cette baguette (5) se trouve un appendice en forme de "L" (7) qui fonctionne comme un butoir sur la partie verticale d'une seconde baguette en forme de "T" (8), qui sert de connection entre les portes (2) et la plate-forme (6), laquelle se divise perpendiculairement en deux dans la partie supérieure de la cage jusqu'à ses deux extrémités, les extrémités de cette baguette en forme de "T" présentent une forme de "L" (9) qui fixe les appendices perpendiculaires (3) des deux portes latérales (2).

2. CAGE - PIÈGE ÉCOLOGIQUE PERFECTIONNÉ selon la revendication antérieure, **caractérisé par** sa position de capture, les appendices perpendiculaires (3) des portes (2) se trouvent sur les terminaisons en forme de "L" (9) de la baguette de connection (8), interdisant que celles-ci ne se ferment par l'effet de gravité, tandis que l'extrémité inférieure de la baguette de connection (8) entre les portes (2) et la plate-forme (6) se trouve sous la pression de l'appendice en forme de "L" (7) ce qui l'empêche de se déplacer vers le haut et libère l'appendice perpendiculaire (3) des portes (2) pour que celles-ci puissent descendre.

3. CAGE - PIÈGE ÉCOLOGIQUE PERFECTIONNÉ selon les revendications antérieures, sa caractéristique est qu'au moment de l'entrée de l'animal dans la structure parallélépipédique (1), attiré par un appât mis à côté (10), celui-ci appuie sur la plate-forme basculante (6), qui bascule et libère la partie verticale de la baguette en forme de "T" (8) qui à son tour libère les appendices perpendiculaires (3) par le mouvement des extrémités de la baguette (8), là où s'exerce toute la pression de fixation des portes (2), qui tombent comme des guillotines, emprisonnant l'animal à l'intérieur.
